# EUROPÄISCHE PATENTANMELDUNG

(11) **EP 1 371 656 A1**
(43) Veröffentlichungstag der Anmeldung: **17.12.2003**
(21) Anmeldenummer: 03012866.4
(22) Anmeldetag: 06.06.2003
(51) Int. Cl.: C07F 9/48, C08K 5/00, C08K 3/02, C08K 13/02

(54) **Mischungen aus einem Phosphonit und anderen Komponenten**

(30) Priorität: 14.06.2002 DE 10226732
(71) Anmelder: Clariant GmbH, 65929 Frankfurt am Main (DE)
(72) Erfinder: Schlosser, Elke, Dl., 86163 Augsburg (DE); Wanzke, Wolfgang, Dr., 86161 Augsburg (DE); Lechner, Christian, Dl., 86857 Hurlach (DE)
(74) Vertreter: Paczkowski, Marcus, Dr.

(57) **Zusammenfassung**

Die Erfindung betrifft Mischungen aus einem Phosphonit (Komponente A) und/oder einem Ester und/oder Salz einer langkettigen Fettsäure (Komponente B) und/oder einem Carboxylester und/oder-amid (Komponente C) sowie deren Verwendung in Polyamiden oder Polyestern.

## Beschreibung

Die Erfindung betrifft Mischungen aus einem Phosphonit (Komponente A) und/oder einem Ester und/oder Salz einer langkettigen Fettsäure (Komponente B) und/oder einem Carboxylester und/oder -amid (Komponente C) sowie deren Verwendung.

Die Verarbeitung von thermoplastischen Kunststoffen erfolgt bis auf wenige Ausnahmen in der Schmelze. Die damit verbundenen Struktur- und Zustandsänderungen übersteht kaum ein Kunststoff, ohne sich in seiner chemischen Struktur zu verändern. Vernetzungen, Oxidation, Molekulargewichtsänderungen und damit auch Änderungen der physikalischen und technischen Eigenschaften können die Folge sein. Um die Belastung der Polymere während der Verarbeitung zu reduzieren, setzt man je nach Kunststoff unterschiedliche Additive ein. Im Allgemeinen werden Stabilisatoren zugegeben, die die Veränderungsprozesse wie Vernetzungs- oder Abbaureaktionen unterbinden oder zumindest bremsen. Weiterhin werden den meisten Kunststoffen Gleitmittel beigemengt, die primär die Aufgabe haben, das Fließverhalten der Schmelze zu verbessern.

In der Regel wird eine Vielzahl unterschiedlicher Additive gleichzeitig verwendet, von denen jedes für sich eine Aufgabe übernimmt. So werden Antioxidantien und Stabilisatoren eingesetzt, damit der Kunststoff ohne chemische Schädigung die Verarbeitung übersteht und anschließend lange Zeit gegen äußere Einflüsse wie Hitze, UV-Licht, Witterung und Sauerstoff (Luft) stabil ist. Neben der Verbesserung des Fließverhaltens verhindern Gleitmittel ein zu starkes Kleben der Kunststoffschmelze an heißen Maschinenteilen und wirken als Dispergiermittel für Pigmente, Füll- und Verstärkungsstoffe.

Durch die Verwendung von Flammschutzmitteln kann die Stabilität des Kunststoffs bei der Verarbeitung in der Schmelze beeinflusst werden. Flammschutzmittel müssen häufig in hohen Dosierungen zugesetzt werden, um eine ausreichende Flammwidrigkeit des Kunststoffs nach internationalen Normen sicherzustellen. Aufgrund Ihrer chemischen Reaktivität, die für die Flammschutzwirkung bei hohen Temperaturen erforderlich ist, können Flammschutzmittel die Verarbeitungsstabilität von Kunststoffen beeinträchtigen. Es kann beispielsweise zu verstärktem Polymerabbau, zu Vernetzungsreaktionen, zu Ausgasungen oder Verfärbungen kommen. Effekte, die bei der Kunststoffverarbeitung ohne Flammschutzmittel eventuell gar nicht, oder nur in abgeschwächter Form, auftreten.

Ohne den Zusatz von Flammschutzmitteln werden Polyamide im Allgemeinen durch kleine Mengen von Kupferhalogeniden sowie aromatische Amine und sterisch gehinderten Phenole stabilisiert, wobei die Erzielung einer langfristigen Stabilität bei hohen Dauergebrauchstemperaturen im Vordergrund steht (H. Zweifel (Ed.): "Plastics Additives Handbook", 5^{th} Edition, Carl Hanser Verlag, München, 2000, Seite 80 bis 96). Auch Polyester benötigen eine antioxidative Stabilisierung im wesentlichen für den Dauergebrauch, nicht für den Verarbeitungsprozess.

EP 0 442 465 A1 beschreibt thermoplastische Formmassen, die halogenierte Flammschutzmittel enthalten und mit Aminen oder Phosphiten oder einer Kombination aus einem Amin und einem Phosphit stabilisiert sind.

Zur Stabilisierung von Polymerformmassen mit phosphorhaltigen Flammschutzmitteln haben sich Carbodiimide, Isocyanate und Isocyanurate als wirksam erwiesen (DE 199 20 276 A1).

Insbesondere bei der Verwendung phosphorhaltiger Flammschutzmittel in Polyamiden und Polyestern erwies sich die Wirkung der bisher beschriebenen Stabilisatoren als unzureichend, speziell um die bei der Verarbeitung auftretenden Effekte wie Verfärbung und Molekulargewichtsabbau zu unterdrücken.

Es war daher Aufgabe der vorliegenden Erfindung, solche (Hilfs-)Mittel zur Verfügung zu stellen, die eine insgesamt verbesserte Wirkung auf den Kunststoff, insbesondere bei Polyamiden und Polyestern, ausüben.

Gelöst wird diese Aufgabe durch Mischungen aus einem Phosphonit (Komponente A) und/oder einem Ester und/oder Salz einer langkettigen Fettsäure (Komponente B) und/oder einem Carboxylester und/oder -amid (Komponente C).

Überraschenderweise wurde gefunden, dass Mischungen aus einem Phosphonit (Komponente A) und/oder einem Ester und/oder Salz einer langkettigen Fettsäure (Komponente B) und/oder einem Carboxylester und/oder -amid (Komponente C) die Verarbeitungsstabilität von flammgeschützten Polyamiden und Polyestern deutlich erhöhen. Die erfindungsgemäßen Kombinationen reduzieren die Verfärbung der Kunststoffe bei der Verarbeitung in der Schmelze und unterdrücken den Abbau der Kunststoffe zu Einheiten mit geringerem Molekulargewicht.

Geeignet als Komponente A sind Phosphonite der allgemeinen Struktur

R-[P(OR₁)₂]ₘ (I)

wobei
- R: ein ein- oder mehrwertiger aliphatischer, aromatischer oder heteroaromatischer organischer Rest sein kann und
- R₁: eine Verbindung der Struktur (II) 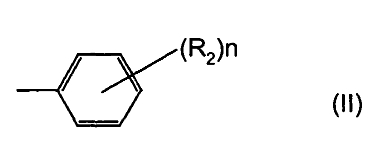 ist oder die beiden Reste R₁ eine verbrückende Gruppe der Struktur (III) bilden 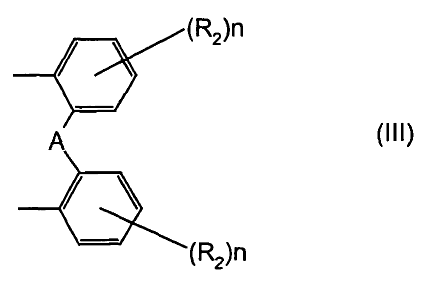 mit
A direkter Bindung, O, S, C₁₋₁₈ alkylen (linear oder verzweigt), C₁₋₁₈ alkyliden (linear oder verzweigt),
in denen
R₂ unabhängig voneinander C₁₋₁₂ alkyl (linear oder verzweigt), C₁₋₁₂ alkoxy, C₅₋₁₂ cycloalkyl bedeuten und
n 0 bis 5 sowie
m 1 bis 4 betragen kann.

Bevorzugt sind die Reste
- R: C₄₋₁₈ alkyl (linear oder verzweigt), C₄₋₁₈ alkylen (linear oder verzweigt), C₅₋₁₂ cycloalkyl, C₅₋₁₂ cycloalkylen, C₆₋₂₄ aryl bzw. heteroaryl, C₆₋₂₄ arylen bzw. heteroarylen welche auch weiter substituiert sein können;
- R₁: eine Verbindung der Struktur (II) oder (III) mit
- R₂: unabhängig voneinander C₁₋₈ alkyl (linear oder verzweigt), C₁₋₈ alkoxy, cyclohexyl;
- A: direkte Bindung, O, C₁₋₈ alkylen (linear oder verzweigt), C₁₋₈ alkyliden (linear oder verzweigt) und
- n: 0 bis 3
- m: 1 bis 3.

Besonders bevorzugt sind die Reste
- R: Cyclohexyl, Phenyl, phenylen, biphenyl und biphenylen
- R₁: eine Verbindung der Struktur (II) oder (III) mit
- R₂: unabhängig voneinander C₁₋₈ alkyl (linear oder verzweigt), C₁₋₈ alkoxy, Cyclohexyl
- A: direkte Bindung, O, C₁₋₆ alkyliden (linear oder verzweigt) und
- n: 1 bis 3
- m: 1 oder 2.

Geeignet als Komponente B sind Ester oder Salze von langkettigen aliphatischen Carbonsäuren (Fettsäuren), die typischerweise Kettenlängen von C₁₄ bis C₄₀ aufweisen.

Bei den Estern handelt es sich um Umsetzungsprodukte der genannten Carbonsäuren mit gebräuchlichen mehrwertigen Alkoholen, wie z. B. Ethylenglykol, Glycerin, Trimethylolpropan oder Pentaerythrit.

Als Salze der genannten Carbonsäuren kommen vor allem Alkali- oder Erdalkalisalze bzw. Aluminium- und Zinksalze in Betracht.

Bevorzugt handelt es sich bei der Komponente B um Ester oder Salze der Stearinsäure wie Glycerinmonostearat oder Calciumstearat.

Bevorzugt handelt es sich bei der Komponente B um Umsetzungsprodukte von Montanwachssäuren mit Ethylenglykol.

Bevorzugt handelt es sich bei den Umsetzungsprodukten um eine Mischung aus Ethylenglykol-Mono-Montanwachssäureester, Ethylenglykol-dimontanwachssäureester, Montanwachssäuren und Ethylenglykol.

Bevorzugt handelt es sich bei der Komponente B um Umsetzungsprodukte von Montanwachssäuren mit einem Calciumsalz.

Besonders bevorzugt handelt es sich bei den Umsetzungsprodukten um eine Mischung aus 1,3-Budandiol-Mono-Montanwachssäureester, 1,3-Budandiol-Di-Montanwachssäureester, Montanwachssäuren, 1,3-Butandiol, Calciummontanat, und dem Calciumsalz.

Geeignet als Komponente C sind Carboxyl(ester)amide.

Bevorzugt handelt es sich bei der Komponente C um ein Derivat eines aromatischen Di- oder Tri-carboxyl(ester)amids.

Bevorzugt handelt es sich bei dem Derivat um N,N'-bis-piperdinyl-1,3-benzoldicarboxamid.

Besonders bevorzugt handelt es sich bei dem Derivat um N,N'-bis(2,2,6,6-tetramethyl-4-piperdinyl)-1,3-benzoldicarboxamid.

Bevorzugt enthalten die erfindungsgemäßen Mischungen weiterhin Phosphite der Formel (IV)

P(OR₁)₃ (IV),

wobei R₁ eine Verbindung der Struktur (II) oder (III) bedeutet.

Insbesondere bevorzugt sind Phosphite, die, basierend auf obigen Ansprüchen, durch eine Friedel-Crafts-Reaktion eines Aromaten oder Heteroaromaten, wie Benzol, Biphenyl oder Diphenylether mit Phosphortrihalogeniden, bevorzugt Phosphortrichlorid, in Gegenwart eines Friedel-Crafts-Katalysators wie Aluminiumchlorid, Zinkchlorid, Eisenchlorid etc. sowie nachfolgender Reaktion mit den der Strukturen (II) und (III) zugrundeliegenden Phenolen, hergestellt werden. Dabei werden ausdrücklich auch solche Gemische mit Phosphiten eingeschlossen, die nach der genannten Reaktionssequenz aus überschüssigem Phosphortrihalogenid und den vorstehend beschriebenen Phenolen entstehen.

Aus dieser Gruppe von Verbindungen sind wiederum die nachstehenden Strukturen (V) und (VI) bevorzugt: 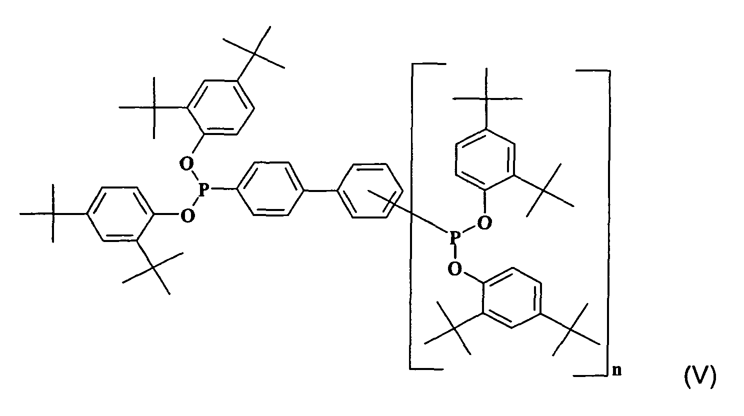 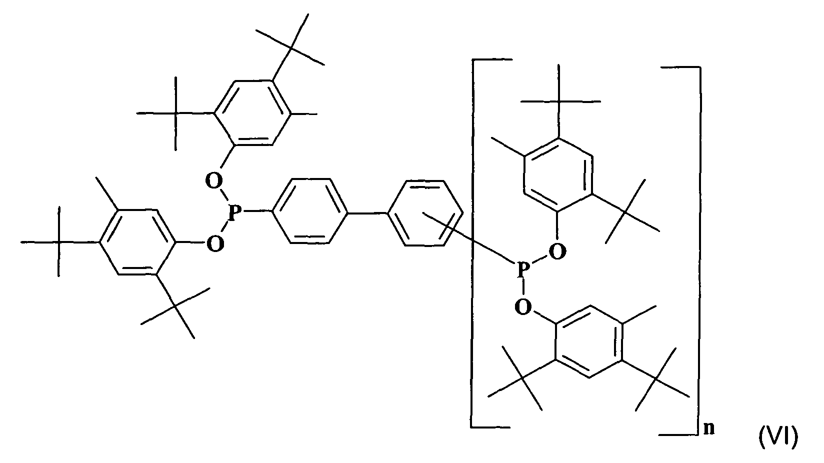 wobei n 0 oder 1 betragen kann und diese Gemische optional weiterhin noch Anteile der Verbindung (VII) bzw. (VIII) enthalten können:

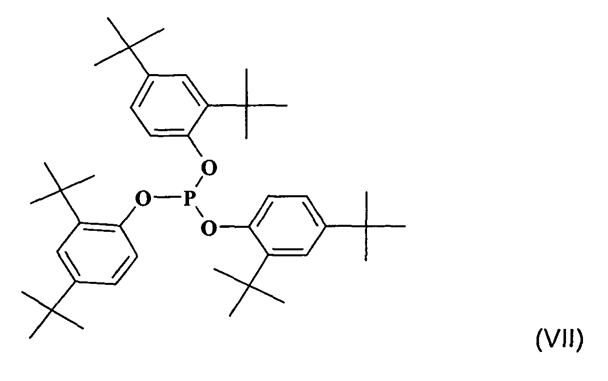

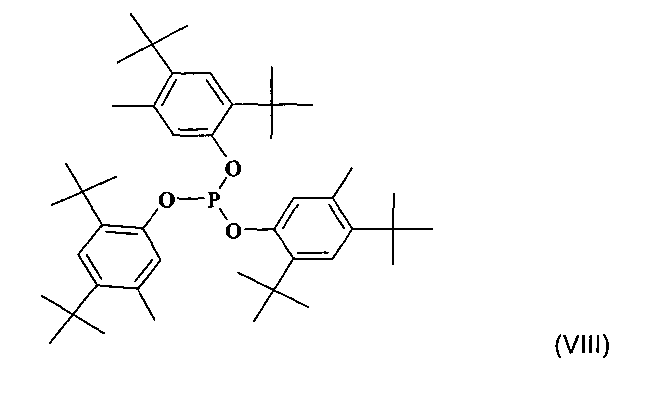

Die vorgenannten Additive können in den verschiedensten Verfahrensschritten in den Kunststoff eingebracht werden. So ist es bei Polyamiden oder Polyestern möglich, bereits zu Beginn oder am Ende der Polymerisation/Polykondensation oder in einem folgenden Compoundierprozess die Additive in die Polymerschmelze einzumischen. Weiterhin gibt es Verarbeitungsprozesse bei denen die Additive erst später zugefügt werden. Dies wird insbesondere beim Einsatz von Pigment- oder Additivmasterbatches praktiziert. Außerdem besteht die Möglichkeit, insbesondere pulverförmige Additive auf das durch den Trocknungsprozess eventuell warme Polymergranulat aufzutrommeln.

Bevorzugt enthält die Mischung 10 bis 90 Gew.-% an Komponente A und 90 bis 10 Gew.-% an Komponente B oder Komponente C.

Bevorzugt enthält die Mischung 30 bis 70 Gew.-% an Komponente A und 70 bis 30 Gew.-% an Komponente B oder Komponente C.

Besonders bevorzugt enthält die Mischung 45 bis 55 Gew.-% an Komponente A und 45 bis 55 Gew.-% an Komponente B oder Komponente C.

Bevorzugt enthält die Mischung 10 bis 90 Gew.-% an Komponente B und 90 bis 10 Gew.-% an Komponente C.

Ebenfalls bevorzugt enthält die Mischung 30 bis 70 Gew.-% an Komponente B und 70 bis 30 Gew.-% an Komponente C.

Besonders bevorzugt enthält die Mischung 45 bis 55 Gew.-% an Komponente B und 55 bis 45 Gew.-% an Komponente C.

Bevorzugt enthält die Mischung 5 bis 90 Gew.-% an Komponente A, 5 bis 90 Gew.-% an Komponente B und 90 bis 5 Gew.-% an Komponente C.

Bevorzugt enthält die Mischung 15 bis 70 Gew.-% an Komponente A, 15 bis 70 Gew.-% an Komponente B und 70 bis 15 Gew.-% an Komponente C.

Bevorzugt enthält die Mischung 30 bis 35 Gew.-% an Komponente A, 30 bis 35 Gew.-% an Komponente B und 35 bis 30 Gew.-% an Komponente C.

Bevorzugt liegen die Komponenten A, B und C als Granulat, Schuppen, Feinkorn, Pulver und/oder Micronisat vor.

Bevorzugt liegen die Komponenten A, B und C als physikalische Mischung der Feststoffe, als Schmelzmischung, als Kompaktat, als Extrudat oder in Form eines Masterbatches vor.

Bevorzugt wird die Mischung in einer Formmasse eines Polymerisates oder Polykondensats verwendet.

Besonders bevorzugt wird die Mischung in einer Formmasse eines flammgeschützten Polymerisates oder Polykondensats verwendet.

Als phosphorhaltige Flammschutzmittel im Sinne der Erfindung, die in Polyamiden oder Polyestern eingesetzt werden können, gelten anorganische und organische Phosphate, Phosphite, Hypophosphite, Phosphonate, Phosphinate und Phosphinoxide sowie elementarer Phosphor.

Bevorzugte Phosphate sind Melaminphosphat, -pyrophosphat oder -polyphosphat, sowie entsprechende Melam-, Melem- oder Melonphosphate. Ebenfalls bevorzugt ist Ammoniumpolyphosphat.

Bevorzugte Hypophosphite sind Calcium-, Zink- und Aluminiumhypophosphit.

Geeignete Phosphinate sind in der PCT/WO 97/39053 beschrieben, auf die ausdrücklich Bezug genommen wird.
Bevorzugt werden als Phosphinate Phosphinsäuresalze der Formel (I) und/oder ein Diphosphinsäuresalz der Formel (II) und/oder deren Polymere, 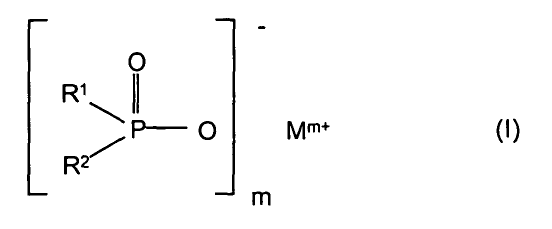 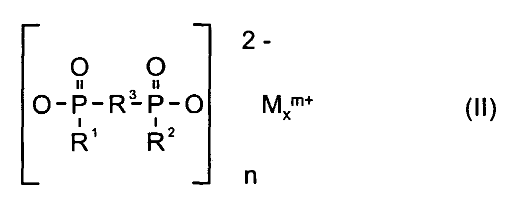 worin
- R¹, R²: gleich oder verschieden sind und C₁-C₆-Alkyl, linear oder verzweigt und/oder Aryl;
- R³: C₂-C₁₀-Alkylen, linear oder verzweigt, C₆-C₁₀-Arylen, -Alkylarylen oder -Arylalkylen;
- M: Calcium-, Aluminium- und/oder Zink-lonen;
- m: 2 oder 3;
- n: 1 oder 3;
- x: 1 oder 2
bedeuten, eingesetzt.

Bevorzugte Phosphinate sind Aluminium-, Calcium- und Zinkphosphinate.

Als elementarer Phosphor kommen roter und schwarzer Phosphor in Frage. Bevorzugt ist roter Phosphor.

Alle phosphorhaltigen Flammschutzmittel können allein oder mit stickstoffhaltigen Synergisten im Polykondensat eingesetzt werden. Typische Kombinationen mit Synergisten sind ebenfalls in der PCT/WO 97/39053, auf die hier ausdrücklich Bezug genommen wird, beschrieben.

Bevorzugt handelt es sich bei den Polymerisaten oder Polykondensaten um Polyamide. Geeignete Polyamide sind z. B. in der DE 199 20 276 Albeschrieben.

Bevorzugt handelt es sich bei den Polyamiden um solche vom Aminosäure-Typ und/oder vom Diamin-Dicarbonsäure-Typ.

Bevorzugt handelt es sich bei den Polyamiden um Polyamid 6 und/oder Polyamid 66.

Bevorzugt sind die Polyamide unverändert, gefärbt, gefüllt, ungefüllt, verstärkt, unverstärkt oder auch anders modifiziert.

Bevorzugt werden die Komponenten A, B und C an den gleichen oder unterschiedlichen Prozessschritten bei der HerstellungNerarbeitung von Polyamiden eingebracht.

Bevorzugt handelt es sich bei den Polykondensaten um Polyester. Geeignete Polyester sind z. B. in der DE 199 20 276 A1 beschrieben.

Bevorzugt handelt es sich bei den Polykondensaten um Polyethylenterephthalat oder Polybutylenterephthalat.

Bevorzugt sind die Polyester unverändert, gefärbt, gefüllt, ungefüllt, verstärkt, unverstärkt oder auch anders modifiziert.

Bevorzugt werden die Komponenten A, B und C an den gleichen oder unterschiedlichen Prozessschritten bei der Herstellung/Verarbeitung von Polyestern eingebracht.

Bevorzugt erfolgt die Einarbeitung der Komponente A, B und C in der Polykondensation, in der Compoundierung oder direkt bei der formgebenden Verarbeitung.

Bevorzugt beträgt die Gesamtmenge der Komponenten A, B und C 0,01 bis 10,00 Gew.-% im Polykondensat.

Besonders bevorzugt beträgt die Gesamtmenge der Komponenten A, B und C 0,1 bis 2,00 Gew.-% im Polykondensat.

Bevorzugt beträgt die Gesamtmenge an Flammschutzmittel im Polymerisat oder Polykondensat 1 bis 50 Gew.-%.

Bevorzugt beträgt die Gesamtmenge an Flammschutzmittel im Polymerisat oder Polykondensat 5 bis 40 Gew.-%.

Besonders bevorzugt beträgt die Gesamtmenge an Flammschutzmittel im Polymerisat oder Polykondensat 10 bis 30 Gew.-%.

Vorzugsweise betrifft die Erfindung die Verwendung von organischen Phosphoniten in Kombination mit Salzen der Montanwachssäure und/oder aromatischen di- oder tri-carboxylestern bzw. -amiden als Stabilisatoren für flammwidrige Polyamide und Polyester.

Mit den erfindungsgemäßen Kombinationen von bestimmten organischen Phosphoniten mit Montanwachssalzen oder -estern und/oder aromatischen di- oder tri-Carboxylestern bzw. -amiden lässt die Verarbeitungsstabilität von flammgeschützten Polyamiden und Polyestern deutlich erhöhen.

### Beispiele

### 1. Eingesetzte Komponenten

Handelsübliche Polymere (Granulate):

| | |
|---|---|
| Polyamid 6.6 (PA 6.6-GV) | ®Durethan AKV 30 (Fa. Bayer AG, D) enthält 30 % Glasfasern. |
| Polybutylenterephthalat (PBT-GV) | ®Celanex 2300 GV1/30 (Fa. Ticona, D) enthält 30 % Glasfasern. |

Flammschutzmittelkomponenten (pulverförmig):
Aluminiumsalz der Methylethylphosphinsäure, im folgenden als MEPAL bezeichnet.
Melapur 200 (Melaminpolyphosphat), im folgenden als MPP bezeichnet, Fa. DSM Melapur, NL
Melapur® MC (Melamincyanurat), im folgenden als MC bezeichnet, Fa. DSM Melapur, NL
Phosphonite (Komponente A): Sandostab® P-EPQ®, Fa. Clariant GmbH, D

Wachskomponenten (Komponente B):
Licowax E, Fa. Clariant GmbH, D (Ester der Montanwachssäure mit Ethylenglykol) Licomont CaV 102, Clariant GmbH, D (Ca-Salz der Montanwachssäure) Licowax OP, Fa. Clariant GmbH, D (mit Ca teilverseifter Ester der Montanwachssäure)

Aromatische di- oder tri-carboxylester bzw. -amide (Komponente C):
Nylostab® S-EED®, Fa. Clariant GmbH, D (* Nylostab S-EED entspricht N,N'-bis(2,2,6,6-tetramethyl-4-piperidyl)-1,3-benzoldicarboxamid)

### 2. Herstellung, Verarbeitung und Prüfung von flammhemmenden Kunststoff-Formmassen

Die Flammschutzmittelkomponenten wurden in dem in den Tabellen angegebenen Verhältnis mit dem Polymergranulat, den Gleitmitteln und Stabilisatoren vermischt und auf einem Doppelschnecken-Extruder (Typ Leistritz LSM 30/34) bei Temperaturen von 260 bis 310°C (PA 6.6-GV) bzw. von 240 bis 280°C (PBT-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320 C Allrounder) bei Massetemperaturen von 270 bis 320°C (PA 6.6-GV) bzw. von 260 bis 280°C (PBT-GV) zu Prüfkörpern verarbeitet und anhand des UL 94-Tests (Underwriter Laboratories) auf Flammwidrigkeit geprüft und klassifiziert.

Die Fließfähigkeit der Formmassen wurde durch Ermittlung des Schmelzvolumenindex (MVR) bei 275 °C / 2,16 kg bestimmt. Ein starker Anstieg des MVR-Wertes deutet auf einen Polymerabbau hin.

Die Verarbeitungseigenschaften in Polyester wurden anhand der Spezifischen Viskosität (SV) beurteilt. Aus dem Granulat der Kunststoff-Formmasse wurde nach ausreichender Trocknung eine 1,0 %ige Lösung in Dichloressigsäure hergestellt und der SV-Wert bestimmt. Je höher der SV-Wert ist, desto geringer war der Polymerabbau während der Einarbeitung des Flammschutzmittels.

Die Farbveränderungen wurden mit einem Minolta Spectrophotometer CM-3600d nach DIN 6174 (L, a, b, Delta E) gemessen.

Sämtliche Versuche der jeweiligen Serie wurden, falls keine anderen Angaben gemacht wurden, aufgrund der Vergleichbarkeit unter identischen Bedingungen (Temperaturprogramme, Schneckengeometrien, Spritzgießparameter, etc.), durchgeführt.

Tabelle 1 zeigt Vergleichsbeispiele, in denen eine Flammschutzmittel-Kombination, basierend auf dem Aluminiumsalz der Methylethylphosphinsäure (MEPAL) und dem stickstoffhaltigen Synergisten Melaminpolyphosphat, sowohl allein als auch mit einem beanspruchten Phosphonit (Komponente A), Calciummontanat (Komponente B) oder Carboxylamid (Komponente C) in glasfaserverstärktem PA 6.6 verarbeitet und geprüft wurden.

Tabelle 2 zeigt die Ergebnisse der in Tabelle 1 dargestellten Vergleichsbeispiele, nachdem die Formassen bei unterschiedlichen Temperaturen spritzgegossen wurden.

Die Ergebnisse der Beispiele, in denen die Flammschutzmittel-Kombination zusammen mit einer Mischung aus den Komponenten A bis C gemäß der Erfindung eingesetzt wurden, sind in den Tabellen 3, 4, 5 und 6 aufgelistet. Alle Mengen sind als Gew.-% angegeben und beziehen sich auf die Kunststoff-Formmasse einschließlich der Flammschutzmittel-Kombination und Zusatzstoffen.

Aus den Beispielen geht hervor, dass die erfindungsgemäßen Zusätze (Mischung aus den Komponenten A bis C) die Verarbeitbarkeit der Polykondensate mit Phosphor-Flammschutzmitteln bzw. den beschriebenen Flammschutzmittel-Kombinationen eindeutig verbessern, ohne die Flammschutzwirkung zu beeinträchtigen.

Die Einarbeitung der Flammschutzmittel in PA 6.6 führt zu einem Polymerabbau, erkennbar an hohen MVR-Werten, und zu einer Graubraun-Verfärbung der Formmassen (V1, V2). Durch die alleinige Zugabe von Calciummontanat oder S-EED kann weder eine Verbesserung in der Farbe der Formmassen erzielt werden noch der Polymerabbau wesentlich reduziert werden (V3, V4). Durch P-EPQ allein erfährt die Flammschutz-Formmasse eine leichte Stabilisierung (V5).

Wird nun eine Kombination aus den Komponenten A bis C eingesetzt (B1, B2, B3, B4), kann eine deutliche Stabilisierung der flammgeschützten Polyamidschmelze und eine wesentlich verminderte Verfärbung der Prüfkörper festgestellt werden. Die synergistische Wirkung der Kombinationen aus den Komponenten A bis C auf die Stabilisierung der Flammschutz-Polymerschmelze macht sich auch bei höheren Verarbeitungstemperaturen deutlich bemerkbar (Tabelle 4). Somit kann das Verarbeitungsfenster für die Polykondensate mit Phosphor-Flammschutzmitteln erweitert werden, was bei einer Produktion der Formmassen im kommerziellen Maßstab von Vorteil ist.

Auch mit Licowax E und Licowax OP in Kombination mit Polymeradditiven kann eine erhöhte Stabilisierung erreicht werden (Tabelle 5). Die beste Wirkung zeigt jedoch das Calciummontanat.

In flammgeschütztem Polyester (PBT) wurde bei Anwendung der erfindungsgemäßen Stabilisierung ein deutlich verminderter Polymerabbau, erkennbar an hohen SV-Zahlen, und eine deutlich geringere Verfärbung festgestellt (Tabelle 6).

**Tabelle 1:**

| Vergleichsbeispiele (Versuchsreihe 1): Flammschutz-Formmassen mit den Komponenten A, B oder C als einzelne Additive in glasfaserverstärktem PA 6.6. | | | | | | | | |
|---|---|---|---|---|---|---|---|---|
| Vergleich | MEPAL [%] | MPP [%] | A P-EPQ [%] | B CaV 102 [%] | C S-EED [%] | Klasse nach UL 94 (0,8 mm) | MVR [cm³/10'] | Delta E*) |
| V1 | 0 | 0 | 0 | 0 | 0 | n.k**) | 19 | 28 |
| V2 | 10 | 5 | 0 | 0 | 0 | V-0 | 44 | 33 |
| V3 | 10 | 5 | 1 | 0 | 0 | V-0 | 19 | 27 |
| V4 | 10 | 5 | 0 | 1 | 0 | V-0 | 58 | 32 |
| V5 | 10 | 5 | 0 | 0 | 1 | V-0 | 33 | 33 |

| | | | | | | | | |
|---|---|---|---|---|---|---|---|---|
| *) von Prüfkörper, Massetemperatur beim Spritzgießen: 280°C | | | | | | | | |
| **) n.k. = nicht klassifizierbar | | | | | | | | |

**Tabelle 2:**

| Vergleichsbeispiele (Versuchsreihe 1): Flammschutz-Formmassen mit den Komponenten A, B oder C als einzelne Additive in glasfaserverstärktem PA 6.6 nach verschiedenen Spritzgießtemperaturen. | | | |
|---|---|---|---|
| Vergleich | Massetemperatur beim Spritzgießen [°C] | MVR [cm³/10'] | Delta E |
| V1 | 290 | 23 | 27 |
| | 300 | 23 | 28 |
| | 310 | 28 | 31 |
| V2 | 290 | 101 | 35 |
| | 300 | 151 | 37 |
| | 310 | 274 | 39 |
| V3 | 290 | 23 | 27 |
| | 300 | 37 | 29 |
| | 310 | 108 | 33 |
| V4 | 290 | 138 | 32 |
| | 300 | 222 | 33 |
| | 310 | 368 | 36 |
| V5 | 290 | 106 | 35 |
| | 300 | 99 | 37 |
| | 310 | 337 | 40 |

**Tabelle 3:**

| Erfindungsgemäße Beispiele (Versuchsreihe 1): Flammschutz-Formmassen mit der Kombination von 2 bzw. 3 Additiv-Komponenten in glasfaserverstärktem PA 6.6. | | | | | | | | |
|---|---|---|---|---|---|---|---|---|
| Beispiele | MEPAL [%] | MPP [%] | A P-EPQ [%] | B CaV 102 [%] | C S-EED [%] | Klasse nach UL 94 (0,8 mm) | MVR [cm³/10'] | Delta E*) |
| B1 | 10 | 5 | 0 | 0,5 | 0,5 | V-0 | 13 | 26 |
| B2 | 10 | 5 | 0,5 | 0,5 | 0 | V-0 | 17 | 23 |
| B3 | 10 | 5 | 0,5 | 0 | 0,5 | V-0 | 12 | 30 |
| B4 | 10 | 5 | 0,33 | 0,33 | 0,33 | V-0 | 22 | 30 |

| | | | | | | | | |
|---|---|---|---|---|---|---|---|---|
| *)von Prüfkörper, Massetemperatur beim Spritzgießen: 280°C | | | | | | | | |

**Tabelle 4:**

| Erfindungsgemäße Beispiele (Versuchsreihe 1): Flammschutz-Formmassen mit der Kombination von 2 bzw. 3 Additiv-Komponenten in glasfaserverstärktem PA 6.6 nach unterschiedlichen Spritzgießtemperaturen. | | | |
|---|---|---|---|
| Beispiele | Massetemperatur beim Spritzgießen [°C] | MVR [cm³/10'] | Delta E |
| B1 | 290 | 54 | 27 |
| | 300 | 82 | 28 |
| | 310 | 118 | 32 |
| B2 | 290 | 35 | 25 |
| | 300 | 64 | 26 |
| | 310 | 130 | 27 |
| B3 | 290 | 42 | 30 |
| | 300 | 77 | 30 |
| | 310 | 151 | 30 |
| B4 | 290 | 44 | 30 |
| | 300 | 44 | 31 |
| | 310 | 69 | 30 |

**Tabelle 5:**

| Erfindungsgemäße Beispiele (Versuchsreihe 2): Flammschutz-Formmassen mit der Kombination von verschiedenen B-Komoponenten und A und C in glasfaserverstärktem PA 6.6. | | | | | | | | |
|---|---|---|---|---|---|---|---|---|
| Versuche | MEPAL [%] | MPP [%] | B Wachs [%] | A P-EPQ [%] | C S-EED [%] | Klasse nach UL 94 (0,8 mm) | MVR [cm³/10'] | Delta E*) |
| V7 | 10 | 5 | 0 | 0 | 0 | V-0 | 41 | 38 |
| B4 | 10 | 5 | CaV 102 0,5 | 0,5 | 0,5 | V-0 | 16 | 29 |
| B5 | 10 | 5 | Wax E 0,5 | 0,5 | 0,5 | V-0 | 19 | 32 |
| B6 | 10 | 5 | Wax OP 0,5 | 0,5 | 0,5 | V-0 | 19 | 29 |

| | | | | | | | | |
|---|---|---|---|---|---|---|---|---|
| *)von Prüfkörper, Massetemperatur beim Spritzgießen: 280°C | | | | | | | | |

**Tabelle 6:**

| Flammschutz-Formmassen mit verschiedenen Kombinationen der Komponenten A und B in glasfaserverstärktem PBT. | | | | | | | |
|---|---|---|---|---|---|---|---|
| Versuche | MEPAL [%] | MC [%] | A P-EPQ [%] | B Wachs [%] | Klasse nach UL 94 (1,6 mm) | SV-Zahl | Delta E |
| V8 | 10 | 10 | 0 | 0 | V-0 | 815 | 18 |
| V9 | 10 | 10 | 0,3 | 0 | V-0 | 892 | 16 |
| V10 | 10 | 10 | 0 | Wax OP 0,4 | V-0 | 794 | 18 |
| B7 | 10 | 10 | 0,3 | Wax E0,4 | V-0 | 978 | 14 |
| B8 | 10 | 10 | 0,3 | Wax OP 0,4 | V-0 | 966 | 14 |

## Patentansprüche

1. Mischungen aus einem Phosphonit (Komponente A) und/oder einem Ester und/oder Salz einer langkettigen Fettsäure (Komponente B) und/oder einem Carboxylester und/oder -amid (Komponente C).

2. Mischungen nach Anspruch 1, **dadurch gekennzeichnet, dass** es sich bei den Phosphoniten um solche der allgemeinen Struktur
R-[P(OR₁)₂]ₘ (I)
handelt, wobei
R ein ein- oder mehrwertiger aliphatischer, aromatischer oder heteroaromatischer organischer Rest ist und
R₁ eine Verbindung der Struktur (II) 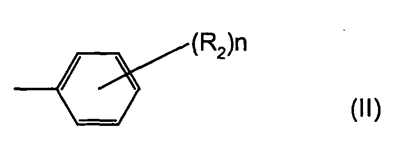 ist oder die beiden Reste R₁ eine verbrückende Gruppe der Struktur (III) bilden 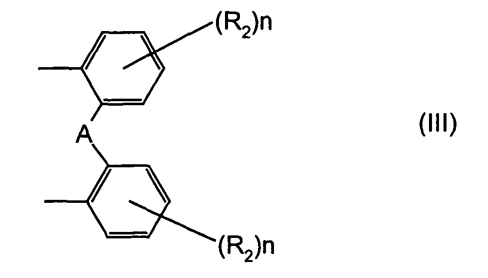 mit
A direkter Bindung, O, S, C₁₋₁₈ alkylen (linear oder verzweigt), C₁₋₁₈ alkyliden (linear oder verzweigt), in denen
R₂ unabhängig voneinander C₁₋₁₂ alkyl (linear oder verzweigt), C₁₋₁₂ alkoxy, C₅₋₁₂ cycloalkyl bedeuten und
n 0 bis 5 sowie
m 1 bis 4 bedeutet.

3. Mischungen nach Anspruch 1 oder 2, **dadurch gekennzeichnet, dass**
R C₄₋₁₈ alkyl (linear oder verzweigt), C₄₋₁₈ alkylen (linear oder verzweigt), C₅₋₁₂ cycloalkyl, C₅₋₁₂ cycloalkylen, C₆₋₂₄ aryl bzw. heteroaryl, C₆₋₂₄ arylen bzw. C₆₋₂₄ heteroarylen welche auch weiter substituiert sein können;
R₁ eine Verbindung der Struktur (II) oder (III) mit
R₂ unabhängig voneinander C₁₋₈ alkyl (linear oder verzweigt), C₁₋₈ alkoxy, cyclohexyl;
A direkte Bindung, O, C₁₋₈ alkylen (linear oder verzweigt), C₁₋₈ alkyliden (linear oder verzweigt) und
n 0 bis 3
m 1 bis 3 bedeuten.

4. Mischungen nach einem oder mehreren der Ansprüche 1 bis 3, **dadurch gekennzeichnet, dass**
R Cyclohexyl, Phenyl, Phenylen, Biphenyl und Biphenyle
R₁ eine Verbindung der Struktur (II) oder (III) mit
R₂ unabhängig voneinander C₁₋₈ alkyl (linear oder verzweigt), C₁₋₈ alkoxy, Cyclohexyl
A direkte Bindung, O, C₁₋₆ alkyliden (linear oder verzweigt) und
n 1 bis 3
m 1 oder 2 bedeuten.

5. Mischungen nach einem oder mehreren der Ansprüche 1 bis 4, **dadurch gekennzeichnet, dass** es sich bei der Komponente B um Ester oder Salze von langkettigen Fettsäuren mit 14 bis 40 C-Atomen handelt.

6. Mischungen nach einem oder mehreren der Ansprüche 1 bis 5, **dadurch gekennzeichnet, dass** es sich bei der Komponente B um Umsetzungsprodukte von langkettigen Fettsäuren mit 14 bis 40 C-Atomen mit mehrwertigen Alkoholen, wie Ethylenglykol, Glycerin, Trimethylolpropan und/oder Pentaerythrit handelt.

7. Mischungen nach einem oder mehreren der Ansprüche 1 bis 5, **dadurch gekennzeichnet, dass** es sich bei der Komponente B um Alkali-, Erdalkali-, Aluminium- und/oder Zinksalze von langkettigen Fettsäuren mit 14 bis 40 C-Atomen handelt.

8. Mischungen nach einem oder mehreren der Ansprüche 1 bis 7, **dadurch gekennzeichnet, dass** es sich bei der Komponente B um Glycerinmonostearat und/oder Calciumstearat handelt.

9. Mischungen nach einem oder mehreren der Ansprüche 1 bis 7, **dadurch gekennzeichnet, dass** es sich bei der Komponente B um Umsetzungsprodukte von Montanwachssäuren mit Ethylenglykol handelt.

10. Mischungen nach Anspruch 9, **dadurch gekennzeichnet, dass** es sich bei den Umsetzungsprodukten um eine Mischung aus Ethylenglykol-monomontanwachssäureester, Ethylenglykol-di-montanwachssäureester, Montanwachssäuren und Ethylenglykol handelt.

11. Mischungen nach einem oder mehreren der Ansprüche 1 bis 7, **dadurch gekennzeichnet, dass** es sich bei der Komponente B um Umsetzungsprodukte von Montanwachssäuren mit einem Calciumsalz handelt.

12. Mischungen nach Anspruch 11, **dadurch gekennzeichnet, dass** es sich bei den Umsetzungsprodukten um eine Mischung aus 1,3-Budandiol-monomontanwachssäureester, 1 ,3-Budandiol-di-montanwachssäureester, Montanwachssäuren, 1,3-Butandiol, Calciummontanat und dem Calciumsalz handelt.

13. Mischungen nach einem oder mehreren der Ansprüche 1 bis 12, **dadurch gekennzeichnet, dass** es sich bei der Komponente C um ein Derivat eines aromatischen Di- oder Tri-carboxyl(ester)amids handelt.

14. Mischungen nach Anspruch 13, **dadurch gekennzeichnet, dass** es sich bei dem Derivat um N,N'-bis-piperdinyl-1,3-benzoldicarboxamid und/oder N,N'bis(2,2,6,6-tetramethyl-4-piperdinyl)-1,3-benzoldicarboxamid handelt.

15. Mischungen nach einem oder mehreren der Ansprüche 1 bis 14, **dadurch gekennzeichnet, dass** sie weiterhin Phosphite der Formel (IV)
P(OR₁)₃ (IV)
enthalten, wobei R₁ eine Verbindung der Struktur (II) oder (III) bedeutet.

16. Mischungen nach Anspruch 15, **dadurch gekennzeichnet, dass** die Phosphite den Strukturen (V) oder (VI) 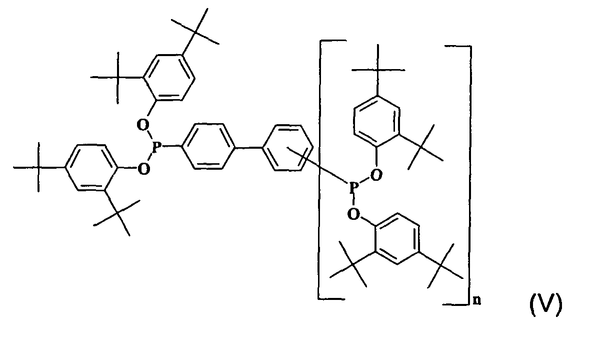 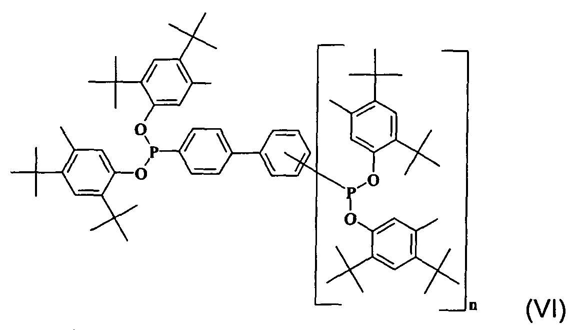 wobei n 0 oder 1 bedeutet.

17. Mischungen nach Anspruch 15 oder 16, **dadurch gekennzeichnet, dass** sie weiterhin Verbindungen der Struktur (VII) bzw. (VIII) 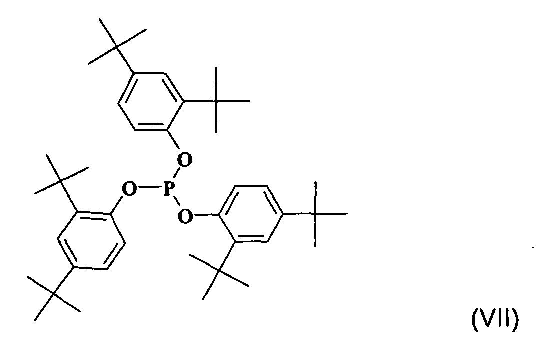 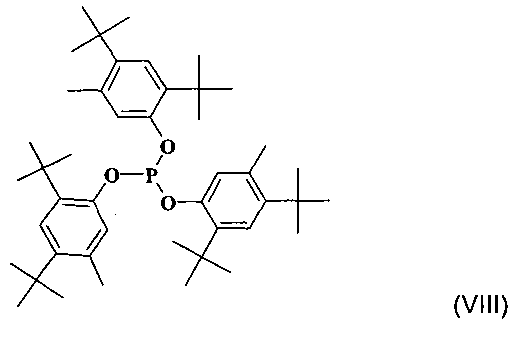 enthalten.

18. Mischungen nach einem oder mehreren der Ansprüche 1 bis 17, **dadurch gekennzeichnet, dass** sie 10 bis 90 Gew.-% an Komponente A und 90 bis 10 Gew.-% an Komponente B oder Komponente C enthalten.

19. Mischungen nach einem oder mehreren der Ansprüche 1 bis 18, **dadurch gekennzeichnet, dass** sie 30 bis 70 Gew.-% an Komponente A und 70 bis 30 Gew.-% an Komponente B oder Komponente C enthalten.

20. Mischungen nach einem oder mehreren der Ansprüche 1 bis 19, **dadurch gekennzeichnet, dass** sie 45 bis 55 Gew.-% an Komponente A und 55 bis 45 Gew.-% an Komponente B oder Komponente C enthalten.

21. Mischungen nach einem oder mehreren der Ansprüche 1 bis 17, **dadurch gekennzeichnet, dass** sie 10 bis 90 Gew.-% an Komponente B und 90 bis 10 Gew.-% an Komponente C enthalten.

22. Mischungen nach Anspruch 21, **dadurch gekennzeichnet, dass** sie 30 bis 70 Gew.-% an Komponente B und 70 bis 30 Gew.-% an Komponente C enthalten.

23. Mischungen nach Anspruch 21 oder 22, **dadurch gekennzeichnet, dass** sie 45 bis 55 Gew.-% an Komponente B und 55 bis 45 Gew.-% an Komponente C enthalten.

24. Mischungen nach einem oder mehreren der Ansprüche 1 bis 17, **dadurch gekennzeichnet, dass** sie 5 bis 90 Gew.-% an Komponente A, 5 bis 90 Gew.-% an Komponente B und 90 bis 5 Gew.-% an Komponente C enthalten.

25. Mischungen nach Anspruch 24, **dadurch gekennzeichnet, dass** sie 15 bis 70 Gew.-% an Komponente A, 15 bis 70 Gew.-% an Komponente B und 70 bis 15 Gew.-% an Komponente C enthalten.

26. Mischungen nach Anspruch 24 oder 25, **dadurch gekennzeichnet, dass** sie 30 bis 35 Gew.-% an Komponente A, 30 bis 35 Gew.-% an Komponente B und 35 bis 30 Gew.-% an Komponente C enthalten.

27. Mischungen nach einem oder mehreren der Ansprüche 1 bis 26, **dadurch gekennzeichnet, dass** die Komponenten A, B und C als Granulat, Schuppen, Feinkorn, Pulver und/oder Micronisat vorliegen.

28. Mischungen nach einem oder mehreren der Ansprüche 1 bis 26, **dadurch gekennzeichnet, dass** die Komponenten A, B und C als physikalische Mischung der Feststoffe, als Schmelzmischung, als Kompaktat, als Extrudat oder in Form eines Masterbatches vorliegen.

29. Verwendung von Mischungen nach mindestens einem der Ansprüche 1 bis 28 in der Formmasse eines Polymerisates oder Polykondensats.

30. Verwendung von Mischungen nach mindestens einem der Ansprüche 1 bis 28 in der Formmasse eines flammgeschützten Polymerisates oder Polykondensats.

31. Verwendung nach Anspruch 29 oder 30, **dadurch gekennzeichnet, dass** phosphorhaltiges Flammschutzmittel eingesetzt wird.

32. Verwendung nach Anspruch 30 oder 31, **dadurch gekennzeichnet, dass** als phosphorhaltiges Flammschutzmittel anorganische und organische Phosphate, Phosphite, Hypophosphite, Phosphonate, Phosphinate und Phosphinoxide und/oder elementarer Phosphor eingesetzt werden.

33. Verwendung nach einem oder mehreren der Ansprüche 30 bis 32, **dadurch gekennzeichnet, dass** als Phosphate Melaminphosphat, -pyrophosphat oder -polyphosphat, sowie entsprechende Melam-, Melem- oder Melonphosphate und/oder Ammoniumpolyphosphat eingesetzt werden.

34. Verwendung nach einem oder mehreren der Ansprüche 30 bis 32, **dadurch gekennzeichnet, dass** als Hypophosphite Calcium-, Zink- und/oder Aluminiumhypophosphit eingesetzt werden.

35. Verwendung nach einem oder mehreren der Ansprüche 30 bis 32, **dadurch gekennzeichnet, dass** als Phosphinate Phosphinsäuresalze der Formel (I) und/oder ein Diphosphinsäuresalz der Formel (II) und/oder deren Polymere, 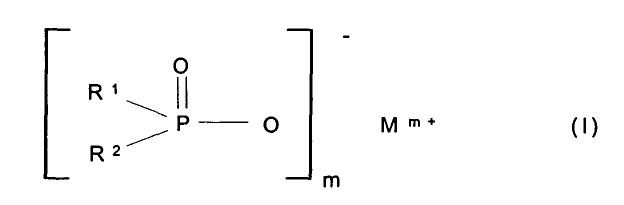 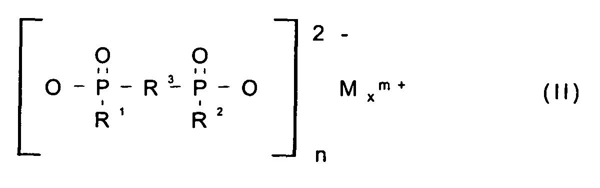 worin
R¹, R² gleich oder verschieden sind und C₁-C₆-Alkyl, linear oder verzweigt und/oder Aryl;
R³ C₂-C₁₀-Alkylen, linear oder verzweigt, C₆-C₁₀-Arylen, -Alkylarylen oder -Arylalkylen;
M Calcium-, Aluminium- und/oder Zink-lonen;
m 2 oder 3;
n 1 oder 3;
x 1 oder 2
bedeuten, eingesetzt werden.

36. Verwendung nach Anspruch 35, **dadurch gekennzeichnet, dass** es sich bei den Phosphinaten um Aluminium-, Calcium- und/oder Zinkphosphinate handelt.

37. Verwendung nach einem oder mehreren der Ansprüche 30 bis 32, **dadurch gekennzeichnet, dass** es sich bei dem elementarem Phosphor um roten Phosphor handelt.

38. Verwendung nach einem oder mehreren der Ansprüche 29 bis 37, **dadurch gekennzeichnet, dass** es sich bei den Polymerisaten oder Polykondensaten um Polyamide handelt.

39. Verwendung nach Anspruch 38, **dadurch gekennzeichnet, dass** es sich bei den Polyamiden um solche vom Aminosäure-Typ und/oder vom Diamin-Dicarbonsäure-Typ handelt.

40. Verwendung nach Anspruch 38 oder 39, **dadurch gekennzeichnet, dass** es sich bei den Polyamiden um Polyamid 6 und/oder Polyamid 66 handelt.

41. Verwendung nach einem oder mehreren der Ansprüche 38 bis 40, **dadurch gekennzeichnet, dass** die Polyamide unverändert, gefärbt, gefüllt, ungefüllt, verstärkt, unverstärkt oder auch anders modifiziert sind.

42. Verwendung nach einem oder mehreren der Ansprüche 38 bis 41, **dadurch gekennzeichnet, dass** die Komponenten A, B und C an den gleichen oder unterschiedlichen Prozessschritten bei der Herstellung-Nerarbeitung von Polyamiden eingebracht werden.

43. Verwendung nach einem oder mehreren der Ansprüche 29 bis 37, **dadurch gekennzeichnet, dass** es sich bei den Polykondensaten um Polyester handelt.

44. Verwendung nach Anspruch 43, **dadurch gekennzeichnet, dass** es sich bei den Polykondensaten um Polyethylenterephthalat und/oder Polybutylenterephthalat handelt.

45. Verwendung nach Anspruch 43 oder 44, **dadurch gekennzeichnet, dass** die Polyester unverändert, gefärbt, gefüllt, ungefüllt, verstärkt, unverstärkt oder auch anders modifiziert sind.

46. Verwendung nach einem oder mehreren der Ansprüche 43 bis 45, **dadurch gekennzeichnet, dass** die Komponenten A, B und C an den gleichen oder unterschiedlichen Prozessschritten bei der Herstellung/Verarbeitung von Polyestern eingebracht werden.

47. Verwendung nach einem oder mehreren der Ansprüche 43 bis 46, **dadurch gekennzeichnet, dass** die Einarbeitung der Komponente A, B und C in der Polykondensation, in der Compoundierung oder direkt bei der formgebenden Verarbeitung erfolgt.

48. Verwendung nach einem oder mehreren der Ansprüche 29 bis 47, **dadurch gekennzeichnet, dass** die Gesamtmenge der Komponenten A, B und C 0,01 bis 10,00 Gew.-% im Polymerisat oder Polykondensat beträgt.

49. Verwendung nach einem oder mehreren der Ansprüche 29 bis 48, **dadurch gekennzeichnet, dass** die Gesamtmenge der Komponenten A, B und C 0,1 bis 2,00 Gew.-% im Polymerisat oder Polykondensat beträgt.

50. Verwendung nach einem oder mehreren der Ansprüche 29 bis 49, **dadurch gekennzeichnet, dass** die Gesamtmenge an Flammschutzmittel im Polymerisat oder Polykondensat 1 bis 50 Gew.-% beträgt.

51. Verwendung nach einem oder mehreren der Ansprüche 29 bis 50, **dadurch gekennzeichnet, dass** die Gesamtmenge an Flammschutzmittel im Polymerisat oder Polykondensat 5 bis 40 Gew.-% beträgt.

52. Verwendung nach einem oder mehreren der Ansprüche 29 bis 41, **dadurch gekennzeichnet, dass** die Gesamtmenge an Flammschutzmittel im Polymerisat oder Polykondensat 10 bis 30 Gew.-% beträgt.
